# EUROPEAN PATENT SPECIFICATION

(11) **EP 2 892 685 B1**
(45) Date of publication and mention of the grant of the patent: **12.08.2020**
(21) Application number: 13756478.7
(22) Date of filing: 03.09.2013
(51) Int. Cl.: B23P 6/00, B23K 26/34, F01D 25/24

(54) **A METHOD FOR REPAIRING A TURBOMACHINE COMPONENT**
VERFAHREN ZUR REPARATUR EINER KOMPONENTE EINER STRÖMUNGSMASCHINE
PROCÉDÉ DE RÉPARATION D'UN ÉLÉMENT DE TURBOMACHINE

(30) Priority: 07.09.2012 IT CO20120040
(43) Date of publication of application: 15.07.2015
(73) Proprietor: Nuovo Pignone S.r.l., 50127 Florence (IT)
(72) Inventor: ANDOLFI, Alessio, I-50127 Florence (IT); PINESCHI, Federico, I-50127 Florence (IT); VITALE, Giovanni, I-50127 Florence (IT); GIORNI, Eugenio, I-50127 Florence (IT); PAOLUCCI, Attilio, I-50127 Florence (IT); MAMMOLITI, Fabrizio, I-50127 Florence (IT); CATASTINI, Riccardo, I-FI 50127 Florence (IT)
(74) Representative: BRP Renaud & Partner mbB Rechtsanwälte Patentanwälte Steuerberater
(86) International application number: PCT/EP2013/068162
(87) International publication number: WO 2014/037338

(56) References cited:
- EP-A1- 1 637 274
- EP-A2- 2 113 633
- WO-A1-2012/152461
- US-A- 5 245 155
- US-A- 5 837 960
- US-A1- 2009 057 275
- US-A1- 2010 287 754
- US-B1- 6 269 540

## Description

### TECHNICAL FIELD

The present invention relates to method and a machine for repairing a turbomachine component by laser-cladding. Particularly, the present invention is usable for repairing stator cases of turbomachines by laser cladding.

### BACKGROUND ART

US 5 837 960 discloses a method for forming articles from materials in particulate form.

The increasing use of turbomachines to the operational limits requires the development of specific repair technologies designed to reproduce conditions close to those of new parts. Both rotating and non-rotating parts are subject to damages due to erosion and/or to wear.

For example, steam turbine shafts are often damaged in coupling areas at shaft ends and in journal bearing areas. On centrifugal compressor shafts the same situation occurs for bearing journals and for the shaft ends, while very often during compressor overhaul; impellers are found with the sealing area worn out. Other rotary or stationary parts can be damaged as well, such as steam turbine blades, centrifugal compressor cases, or gas turbine rotors. In stator cases, for example stator cases of steam turbines, having stator blades, areas close to the blades are particularly difficult to be accessed. When traditional repairing techniques are used, the removal of stator blades is normally required before repairing.

In the above field, conventional repairing techniques, such as electric arc or microplasm deposit welding, show a plurality of disadvantages, i.e., in particular, high heating and cooling rates and low melting volumes. As an alternative, repairing methods by laser surfacing are known. Advantages of the latter over alternative surfacing processes include:
Chemically cleanliness, as combustion or ion bombardment are not involved,
Localized heating with minimum heat transfer to the substrate, resulting in minimal thermal damage for the component,
Reduced post-machining procedures,
Possibility to process very hard, brittle, or soft materials,
Possibility to control heat penetration,
Possibility to deposit thicker layers.

Among laser surfacing methods, laser cladding is generally known. Laser cladding uses a laser beam to fuse a cladding material having desired properties into the base material of a component whose surface is to be repaired. Laser cladding offers the possibility to create surface layers with superior properties in terms of pureness, homogeneity, hardness, bonding, and microstructure.

Laser cladding repairing methods are already used to repair stationary components, as described in US20100287754, or to deposit small volumes of cladding material, as described in US20090057275.

When repairing stator cases, and in particular when repairing areas close to stator blades laser cladding is particularly challenging for the necessity of providing a laser beam having a length suitable for reaching such a narrow recess. In addition, the cladding powder in excess, which is not fused to the base materiel of the component, would require to be conveniently removed after the repairing process. For the above reasons, in such cases laser cladding is not used or blades are removed before repairing the damaged areas.

It would be therefore desirable to provide an improved laser cladding method and machine which permits to avoid such inconveniencies of the known prior arts, in a fast and reproducible way for each turbomachine component to be repaired and in particular for turbomachine components having narrow recesses, for example stator cases with stator blades.

### SUMMARY

According to a first embodiment, the present invention provides a method for repairing a turbomachine component as defined in claim 1.

With respect to other known repairing methods, the solution of the present invention allows to repair more quickly and efficiently turbomachine component having narrow recesses subject to damaging and/or wear and/or corrosion and which need therefore to be repaired by a surfacing layering method. In particular, in repairing a stator case having stator blades, the latter do not need to be removed. The use of a laser cladding process permits to efficiently rebuild greater damaged volume, by depositing layers of greater thickness, without diminishing the mechanical properties of the repaired component.

According to a further advantageous feature of the first embodiment, the cladding path is an angular path, whose end points are spaced from one another of 180°. This allows applying the method of the present invention for quickly and efficiently repairing the halves of a stator case.

In a second embodiment, the present invention provides a laser cladding machine as defined in claim 6.

The same advantages described above with reference to the first embodiment of the present invention are accomplished by this second embodiment.

### BRIEF DESCRIPTION OF THE DRAWINGS

Other object feature and advantages of the present invention will become evident from the following description of the embodiments of the invention taken in conjunction with the following drawings, wherein:
Figure 1 is a general block diagram of a method for repairing a turbomachine, according to the present invention;
Figure 2 is a prospect view of a laser cladding machine according to the present invention;
Figure 3 are a detailed prospect view of the laser cladding machine in figure 2; and
Figure 4 is a schematic view of essential components of the the laser cladding machine in figure 2.

### DETAILED DESCRIPTION OF SOME PREFERRED EMBODIMENTS OF THE INVENTION

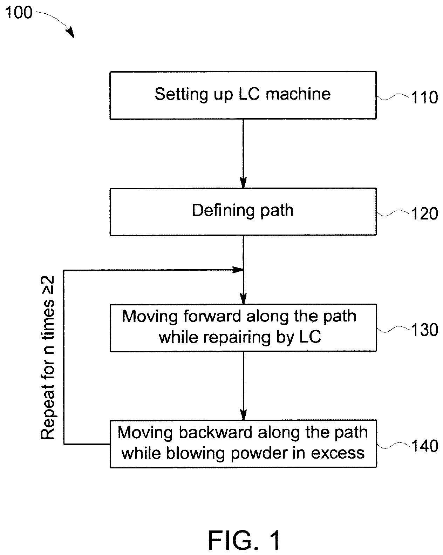

With reference to the attached figure 1, a method for repairing a turbomachine component C is overall indicated with 100.

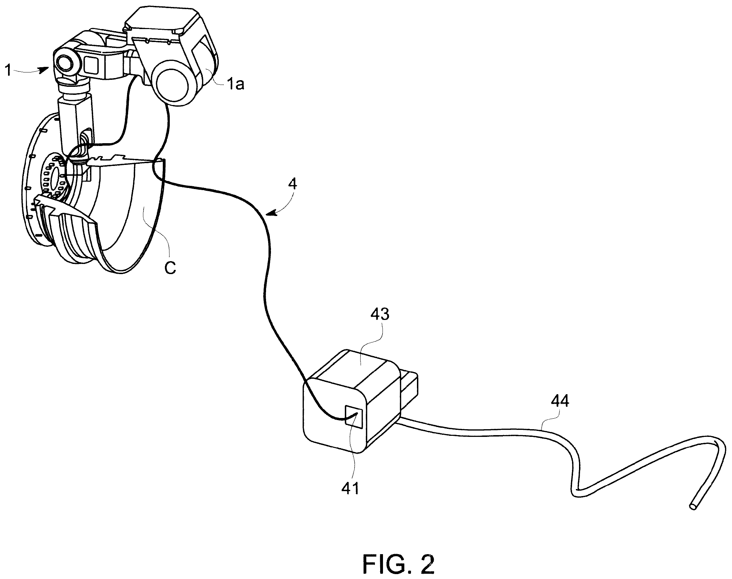

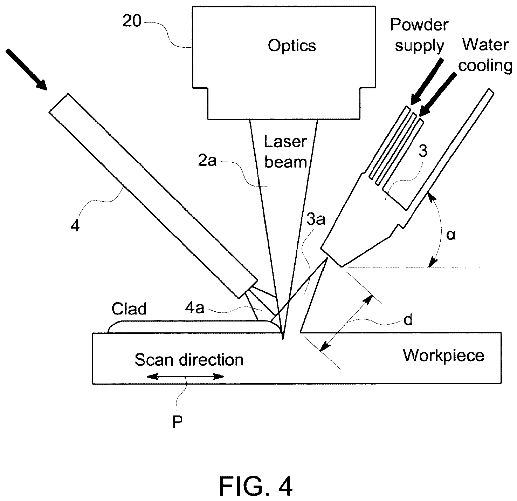

With reference to the attached figures 2-4, a laser cladding machine for repairing a turbomachine component C is overall indicated with 1.

The method 1 comprises a first step 110 of setting up a laser cladding machine 1 including a laser source 2, a powder feeder 3 and an air source 4. The laser source 2 and the powder feeder 3 are mounted on a robotic arm 1a of the laser cladding machine 1.

The laser cladding machine 1 is configured in such a way that a laser beam 2a, a powder jet 3a and an air jet 4a are respectively generated by the laser source 2, the powder feeder 3 and the air source 4, converging on an area to be repaired within a narrow recess of the turbomachine component C. The laser source 2 includes an optical device 20 for directing the laser beam 2a towards the area to be repaired. The focal length of the optical device 20 is conveniently chosen in order that the laser beam 2a generated by the laser source 2 has a convenient length, which permits to reach narrow recesses of the turbomachine component C.

The powder feeder 3 includes an off-axis nozzle 30, i.e. a nozzle generating a powder jet 3a which is not coaxial with the laser beam 2a. The nozzle 30 is provided at the end of an elongated flange 31 in such a way that the powder jet 3a can be conveniently directed towards the area to be repaired within a narrow recess of the turbomachine component C. The air source 4 includes a flexible tube 40 extending from an inlet section 41 to an outlet section 42. The flexible tube 40 is attached to the robotic arm 1a in such a way that the outlet section 42 is positioned in close proximity to the nozzle 30, in order to direct the air jet 4a towards the area to be repaired. The geometrical arrangement of the optical device 20, of the elongated flange 31 and of the terminal portion of the flexible tube 40 comprising the outlet section 42 permit to converge the laser beam 2a, a powder jet 3a and an air jet 4a on the area to be repaired. The inlet section 41 of the flexible tube 40 is connected to a volumetric compressor 43 for generating an air flow through the flexible tube 40 in order to produce the air jet 4a through the outlet section 42. The air source 4 further comprises a second tube 44 for providing air to the volumetric compressor 43 and a heat exchanger (not represented) for heating the air reaching the outlet section 42. Temperature of the air jet 4a has to be sufficiently high but in any case significantly lower than the tempering temperature of the material of the component C, in order not to modify the mechanical properties and structure of the repaired areas. For example, if component C is made of a low-alloy steel temperature of the air jet is preferably comprised between 200 °C and 250 °C.

In the embodiment of the attached figures 2-4, the turbomachine component C is a steam turbine stator case comprising two shells 10 (only one shell 10 is represented in the attached figures, the other being identical), each shell 10 corresponding to a respective half portion of the stator case C. Method 1 is suitable for repairing areas which are damaged due to erosion and/or to wear along the inner surfaces of the shell 10, in particular areas close to the stator blades 11, for example areas in the narrow recess 12 between two adjacent rows of stator blades where a corresponding impeller of the steam turbines is housed.

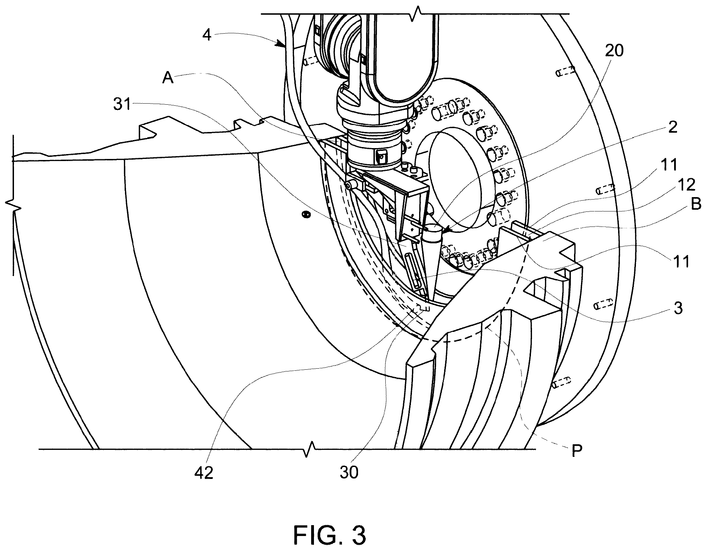

It is to be noted that the plurality of distinct and separated stator blades 11 are shown as a single piece in figure 3 only for simplifying the figure

After the first step 110, the method 100 includes a second step 120 of defining a linear or angular path P including areas to be repaired by laser cladding within the narrow recess. The path extends between a first end point A and a second end point B. In the embodiment of the attached figures 2-4, the path P is angular and corresponds to half a circumference, the angular distance between the first end point A and the second end point B being 180°.

Before repairing the damaged area a plurality of process parameters of the laser cladding machine 1 have to be defined. The process parameters include:
powder rate,
laser beam power,
scanning speed,
stand-off distance (i.e. distance between the nozzle of the powder feeder 3 and the areas to be repaired),
cover gas flow rate,
powder mesh,
energy density,
focal length of the optical device 20 of the laser source 2,
angle between the laser beam 2a and the path P.

Some of the above parameters depend from the geometry of the component C. In particular, when repairing areas in narrow recesses the focal length must be conveniently high in order that the laser beam 2a reaches the area to be repaired along the path P. Given the above geometrical constrain, all the other parameters have to be conveniently defined in order to efficiently repair the damaged areas of the component C. The tuning of the above parameters is however not a specific object of the present invention.

The method further includes a preliminary step of machining the area to be repaired along the path P, in order to create an even surface on which laser cladding will be subsequently performed, as above described. In the embodiment of the attached figures 2-4, the preliminary step of machining typically includes turning the area to be repaired by using a vertical lathe comprising a mandrel on which the shell 10 is mounted, according to a conventional and well-known in the art turning procedure.

After the above parameters have been defined, after the preliminary step of machining and after execution of the second step 120, the method 100 includes a third cladding step 130 of moving forward the laser cladding machine 1 or the turbomachine component C, one relatively to the other, in order that the path P is covered from the first to the second end point A, B by the laser beam 2a and the powder jet 3a for repairing the damaged areas to be repaired along the path P. In the embodiment of the attached figures 2-4, the robotic arm 1a is moved along the circular path P from the first end point A to the second end point B in order that the path P is covered by the laser beam 2a and the powder jet 3a.

During the cladding process, only part of the cladding material, i.e. of the powder from the jet 3a is fused on the component C. Therefore, after the third step 130 has been performed, an excess of powder, which has not been fused in the component C by the cladding process, will remain along the path P. To remove such excess, after the third step 130, the method 100 includes a fourth cleaning step 140 of moving backward the laser cladding machine 1 or the turbomachine component C, one relatively to the other, in order that the path P is covered from the second to the first end point B, A by the air jet 4a for blowing away the powder in excess from the repaired areas in the recess. In the embodiment of the attached figures 2-4, the robotic arm 1a is moved along the circular path P from the second end point B to the first end point A, in order that the path P is covered by air jet 4a.

According to the different embodiments of the present invention, to complete the repairing of the damaged areas along the path P, the third and the fourth step 130, 140 have to be repeated once or more than once, i.e. a total number of times n≥2, in order to apply at least two layers of cladding material. The number of repetitions n depends on the thickness of the layers of cladding material deposited at each execution of the third cladding step 130 and on the total amount of cladding material to be deposited to achieve perfect reparation along the path P.

According to some embodiments of the present invention, when repeating the third step 130 the angle between the laser beam 2a and the path P along the area to be repaired is changed. Typically in all cases such angle is lower or equal to 90°.

In general, many other turbomachine components can be repaired with the method of the present invention by using a laser cladding method and machine as above described.

In all cases it essential that third and the fourth step 130, 140 are repeated one after the other, respectively, in order to clean the repaired areas from the unfused cladding material after each execution of the third cladding step 130.

## Claims

1. A method (100) for repairing a turbomachine component (C), the method comprising the steps of:
setting up (110) a laser cladding machine (1) including a laser source (2) a powder feeder (3) and an air source (4), the laser cladding machine (1) being configured in such a way that a laser beam (2a), a powder jet (3a) and an air jet (4a), respectively generated by the laser source (2), the powder feeder (3) and the air source (4), converge on an area to be repaired within a narrow recess of said turbomachine component;
defining a path (120) including areas to be repaired by laser cladding within said narrow recess, said path being extended between a first end point and a second end point;
moving forward (130) one of the laser cladding machine (1) and the turbomachine component (C) relatively to the other of the laser cladding machine (1) and the turbomachine component (C), in order that said path is covered from the first to the second end point by the laser beam (2a) and the powder jet (3a) for repairing said areas to be repaired;
moving backward (140) one of the laser cladding machine (1) and the turbomachine component (C) relatively to the other of the laser cladding machine (1) and the turbomachine component (C), in order that said path is covered from the second to the first end point by the air jet (4a) for blowing away the powder in excess from said recess with heated air;
wherein the turbomachine component is a stator case having stator blades (11) and damaged areas in the narrow recess (12) between adjacent stator blades (11) are repaired; and
wherein one of the laser cladding machine (1) and the turbomachine component (C) is moved relatively to the other by moving a robotic arm (1a) along a circular path (P), the robotic arm (1a) comprising the laser source (2) and the powder feeder (3).

2. The method (100) according to claim 1, wherein the steps moving forward (130) and moving backward (140) are repeated once or more than once.

3. The method (100) according to claim 1 or claim 2, wherein said path is an angular path.

4. The method (100) according to any preceding claim, wherein the first and second point are angularly spaced from one another of 180°.

5. The method (100) according to any preceding claim, wherein:
the steps of moving forward (130) and moving backward (140) are repeated; and
an angle between the laser beam (2a) and the path (P) along the area to be repaired is changed, relative to the angle used in the original step of moving forward, when the step of moving forward is repeated.

6. A laser cladding machine (1) including a laser source (2) a powder feeder (3) and an air source (4), the laser cladding machine (1) being configured in such a way that a laser beam (2a), a powder jet (3a) and an air jet (4a), respectively generated by the laser source (2), the powder feeder (3) and the air source (4), converge on a same area, the laser cladding machine comprising specific means for carrying out the method according to any of claims

## Patentansprüche

1. Verfahren (100) zum Reparieren einer Turbomaschinenkomponente (C), wobei das Verfahren als Schritte umfasst:
Einrichten (110) einer Laser-Auftragsschweißmaschine (1) mit einer Laserquelle (2), einer Pulverzufuhr (3) und einer Luftquelle (4), wobei die Laser-Auftragsschweißmaschine (1) so konfiguriert ist, dass ein Laserstrahl (2a), ein Pulverstrahl (3a) und ein Luftstrahl (4a), die jeweils von der Laserquelle (2), der Pulverzufuhr (3) und der Luftquelle (4) erzeugt werden, in einem zu reparierenden Bereich innerhalb einer schmalen Aussparung der Turbomaschinenkomponente konvergieren;
Definieren eines Pfades (120) mit Bereichen, die durch Laserauftragschweißen innerhalb der schmalen Aussparung repariert werden sollen, wobei der Pfad zwischen einem ersten Endpunkt und einem zweiten Endpunkt verläuft;
Vorwärtsbewegen (130) entweder der Laser-Auftragsschweißmaschine (1) oder der Turbomaschinenkomponente (C) relativ zu der anderen von der Laser-Auftragsschweißmaschine (1) und der Turbomaschinenkomponente (C), so dass der Pfad von dem ersten zu dem zweiten Endpunkt durch den Laserstrahl (2a) und den Pulverstrahl (3a) zur Reparatur der zu reparierenden Bereiche abgedeckt wird;
Rückwärtsbewegen (140) entweder der Laser-Auftragsschweißmaschine (1) oder der Turbomaschinenkomponente (C) relativ zu der anderen von der Laser-Auftragsschweißmaschine (1) und der Turbomaschinenkomponente (C), damit der Pfad von dem zweiten zu dem ersten Endpunkt durch den Luftstrahl (4a) abgedeckt wird, um das überschüssige Pulver aus der Aussparung mit erwärmter Luft wegzublasen;
wobei die Turbomaschinenkomponente ein Statorgehäuse mit Statorschaufeln (11) ist und beschädigte Bereiche in der schmalen Aussparung (12) zwischen benachbarten Statorschaufeln (11) repariert werden; und
wobei entweder die Laser-Auftragsschweißmaschine (1) oder die Turbomaschinenkomponente (C) relativ zu der anderen bewegt wird, indem ein Roboterarm (1a) entlang eines kreisförmigen Pfades (P) bewegt wird, wobei der Roboterarm (1a) die Laserquelle (2) und die Pulverzufuhr (3) umfasst.

2. Verfahren (100) nach Anspruch 1, wobei die Schritte des Vorwärtsbewegens (130) und des Rückwärtsbewegens (140) einmal oder mehr als einmal wiederholt werden.

3. Verfahren (100) nach Anspruch 1 oder Anspruch 2, wobei der Pfad ein Winkelpfad ist.

4. Verfahren (100) nach einem der vorstehenden Ansprüche, wobei der erste und der zweite Punkt in einem Winkel von 180° voneinander beabstandet sind.

5. Verfahren (100) nach einem der vorstehenden Ansprüche, wobei:
die Schritte des Vorwärtsbewegens (130) und des Rückwärtsbewegens (140) wiederholt werden; und
ein Winkel zwischen dem Laserstrahl (2a) und dem Pfad (P) entlang des zu reparierenden Bereichs relativ zu dem Winkel, der beim ursprünglichen Schritt des Vorwärtsbewegens verwendet wurde, geändert wird, wenn der Schritt des Vorwärtsbewegens wiederholt wird.

6. Laser-Auftragsschweißmaschine (1) mit einer Laserquelle (2), einer Pulverzufuhr (3) und einer Luftquelle (4), wobei die Laser-Auftragsschweißmaschine (1) so konfiguriert ist, dass ein Laserstrahl (2a), ein Pulverstrahl (3a) und ein Luftstrahl (4a), die jeweils von der Laserquelle (2), der Pulverzufuhr (3) und der Luftquelle (4) erzeugt werden, in einem gleichen Bereich konvergieren, wobei die Laser-Auftragsschweißmaschine spezifische Mittel zur Durchführung des Verfahrens nach einem der Ansprüche 1 bis 4 umfasst.

## Revendications

1. Procédé **(100) de réparation d'un élément de turbomachine** (C), le procédé comprenant les étapes consistant à :
mettre en place (110) une machine de gainage laser (1) incluant une source laser (2) un **dispositif d'alimentation en poudre (3) et une source d'air** (4), la machine de gainage laser (1) **étant configurée de telle sorte qu'un faisceau laser** (2a), un jet de poudre **(3a) et un jet d'air** (4a), respectivement générés par la source laser (2), le dispo**sitif d'alimentation en poudre (3) et la source d'air** (4), convergent vers une zone **à réparer à l'intérieur d'un évidement étroit dudit élément de turbomachine ;**
définir une trajectoire (120) incluant des zones à réparer par gainage laser à l'intérieur dudit évidement étroit, ladite trajectoire étant étendue entre un premier **point d'extrémité et un second point d'extrémité** ;
**déplacer vers l'avant (130) l'un de la machine de gainage laser** (1) et de **l'élément de turbomachine (C) par rapport à l'autre de la** machine de gainage laser (1) et de l'élément de turbomachine (C), afin que ladite trajectoire soit **couverte du premier au second point d'extrémité par le faisceau laser** (2a) et le jet de poudre (3a) pour réparer lesdites zones à réparer ;
déplacer vers l'arrière **(140) l'une de la machine de gainage laser** (1) et de **l'élément de turbomachine (C) par rapport à l'autre de la machine de gainage** laser **(1) et de l'élément de turbomachine** (C), afin que ladite trajectoire soit couverte du second au premier point **d'extrémité par le jet d'air** (4a) pour expulser **l'excès de poudre dudit évidement avec de l'air chauffé** ;
**dans lequel l'élément de turbomachine est un carter de stator possédant** des aubes de stator (11) **et des zones endommagées dans l'évidement étroit** (12) entre des aubes de stator adjacentes (11) sont réparées ; et
dans lequel l'un de la machine de gainage laser (1) et de l'élément de turbomachine (c) est déplacé par rapport à l'autre en déplaçant un bras robotisé (1a) le long d'une trajectoire circulaire (P), le bras robotisé (1a) comprenant la source laser (2) et le dispositif d'alimentation en poudre (3).

2. Procédé (100) selon la revendication 1, dans lequel les étapes de déplacement vers l'avant (130) et de déplacement vers l'arrière (140) sont répétées une ou plusieurs fois.

3. Procédé (100) selon la revendication 1 ou la revendication 2, dans lequel ladite trajectoire est une trajectoire angulaire.

4. Procédé **(100) selon l'une quelconque des revendications précédentes, dans** lequel le premier et **le second point sont espacés angulairement l'un de l'autre de 180°**.

5. Procédé **(100) selon l'une quelconque des revendications précédentes,** dans lequel :
**les étapes de déplacement vers l'avant** (130) et de déplacement vers **l'arrière** (140) sont répétées ; et
un angle entre le faisceau laser (2a) et la trajectoire (P) le long de la zone à **réparer est modifié, par rapport à l'angle utilisé lors de l'étape initiale de déplacement vers l'avant, lorsque l'étape de déplacement vers l'avant est répétée.**

6. Machine de gainage laser (1) incluant une source laser (2) un dispositif **d'alimentation en poudre (3) et une source d'air** (4), la machine de gainage laser (1) **étant configurée de telle sorte qu'un faisceau laser** (2a), un jet de poudre **(3a) et un jet d'air** (4a), respectivement générés par la source laser (2), le **dispositif d'alimentation en poudre (3) et la source d'air** (4), convergent vers une même zone, la machine de gainage laser comprenant des moyens spécifiques **pour mettre en œuvre le procédé selon l'un**e quelconque des revendications 1 à 4.
